(19) Europäisches Patentamt / European Patent Office / Office européen des brevets

(11) **EP 3 248 989 B1**

(12) **EUROPEAN PATENT SPECIFICATION**

(45) Date of publication and mention
of the grant of the patent:
**02.12.2020 Bulletin 2020/49**

(51) Int Cl.:
***C08C 19/02*** *(2006.01)*

(21) Application number: **16170855.7**

(22) Date of filing: **23.05.2016**

(54) **HYDROGENATION OF NITRILE GROUPS IN HYDROGENATED NITRILE BUTADIENE RUBBER AND TANDEM HYDROGENATION OF NITRILE GROUPS AND OLEFINIC GROUPS IN NITRILE BUTADIENE RUBBER USING A RUTHENIUM OR RHODIUM COMPLEX AND A BASIC REAGENT**

HYDRIERUNG VON NITRILGRUPPEN IN HYDRIERTEM NITRILBUTADIENGUMMI UND TANDEMHYDRIERUNG VON NITRILGRUPPEN UND OLEFINGRUPPEN IN NITRILBUTADIENGUMMI MIT EINEM RUTHENIUM- ODER RHODIUMKOMPLEX UND EINEM BASISCHEN REAGENZ

HYDROGÉNATION DE GROUPES NITRILES DANS UN CAOUTCHOUC NITRILE-BUTADIÈNE HYDROGÉNÉ ET HYDROGÉNATION TANDEM DES GROUPES NITRILES ET DES GROUPES OLÉFINIQUES DANS UN CAOUTCHOUC NITRILE-BUTADIÈNE À L'AIDE D'UN COMPLEXE DE RUTHÉNIUM OU DE RHODIUM ET D'UN RÉACTIF BASIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.11.2017 Bulletin 2017/48**

(73) Proprietor: **UNIVERSITY OF WATERLOO**
**Waterloo, Ontario N2L 3G1 (CA)**

(72) Inventors:
• **REMPEL, Garry**
**Waterloo, Ontario N2T 2H4 (CA)**
• **PAN, Qinmin**
**Waterloo, Ontario N2T 2W9 (CA)**
• **LIU, Minghui**
**Waterloo, Ontario N2T 2W9 (CA)**

(74) Representative: **Hollah, Dorothee**
**Patentanwälte**
**Isenbruck Bösl Hörschler PartG mbB**
**Eastsite One**
**Seckenheimer Landstrasse 4**
**68163 Mannheim (DE)**

(56) References cited:
**US-A1- 2003 171 500**

• **MCMANUS N T ET AL: "Improvements in the hydrogenation of nitrile rubber using Wilkinson's catalyst", RUBBER CHEMISTRY AND TECHNOLOGY, AMERICAN CHEMICAL SOCIETY, RUBBER DIVISION, US, vol. 81, 1 January 2008 (2008-01-01), pages 227-243, XP009191453, ISSN: 0035-9475**
• **PARENT SCOTT J ET AL: IND.ENG.CHEM.RES,, vol. 35, 4 December 1996 (1996-12-04), pages 4417-4423, XP002761074, DOI: 10.1021/IE9506680**
• **YOSHIDA T ET AL: "Catalytic hydrogenation of nitriles and dehydrogenation of amines with the rhodium(I) hydrido compounds [RhH(PPri3)3] and [Rh2H2( -N2){P(cyclohexyl)3}4]", JOURNAL OF THE CHEMICAL SOCIETY, CHEMICAL COMMUNICATIONS, UK, vol. 19, 1 January 1979 (1979-01-01), pages 870-871, XP002761075, DOI: 10.1039/C39790000870**
• **TOTI A ET AL: "Activation of single and multiple C-N bonds by Ru(II) catalysts in homogeneous phase", COMPTES RENDUS - CHIMIE, ELSEVIER, PARIS, FR, vol. 7, no. 8-9, 1 August 2004 (2004-08-01), pages 769-778, XP027553177, ISSN: 1631-0748 [retrieved on 2004-08-27]**

- **STEPHAN ENTHALER ET AL: "A General and Environmentally Benign Catalytic Reduction of Nitriles to Primary Amines", CHEMISTRY - A EUROPEAN JOURNAL., vol. 14, no. 31, 29 October 2008 (2008-10-29), pages 9491-9494, XP0055297957, WEINHEIM, DE ISSN: 0947-6539, DOI: 10.1002/chem.200801600**

**Description**

The present invention relates to a **process** for the hydrogenation of the carbon-nitrogen triple bonds (nitrile groups) in hydrogenated butadiene rubber (HNBR) and for the tandem hydrogenation of carbon-nitrogen triple bonds and carbon-carbon double bonds (olefinic groups) in nitrile butadiene rubber (NBR) in solution form by treatment of the polymer with hydrogen ($H_2$) in the presence of a ruthenium or rhodium catalyst and a basic reagent.

BACKGROUND OF THE INVENTION

**Acrylonitrile butadiene rubber (Nitrile butadiene rubber, NBR)** is a material that is used extensively in automotive and other industries and in both oil and gas equipment and engine delivery systems due to its extraordinary oil and solvent resistance when compared to similar diene-based rubbers.
Synthesized through **emulsion copolymerization** of butadiene (BD) and acrylonitrile (AN or ACN), there is still a **residual carbon-carbon double bond** left in each BD segment in the final polymer after the polymerization of NBR. The rubber's performance decreases rapidly when handling sour gas, oxidized fuel, and aggressive temperatures at high temperatures. This is due to the fact that the residual carbon-carbon double bonds in the polymer backbone are prone to degradation when exposed to light, heat, or ozone. The range of application can **be extended by reducing the reactivity of the material** in resistance to aggressive environments **through hydrogenating** these unsaturated bonds.

A variation of NBR, **hydrogenated NBR (HNBR)** is formed when most of the butadiene segments (carbon-carbon double bonds) in the NBR have been hydrogenated. This chemical change can improve the properties of thermal stability, chemical resistance, and tensile strength, allowing for a variety of applications in seals, hoses, as well as belts in cars and oilfields.
By hydrogenating NBR, the mechanical, thermo-oxidative, and chemical resistant properties have improved greatly, especially over a large range of temperatures and especially after long-term exposure to heat, oil, and chemicals. These unique properties have led to increased applications of HNBR in the automotive, industrial, and other various performance-demanding areas. A large volume of these applications rests in the automotive market, as HNBR is used for a host of dynamic and static seals, hoses, and timing belts. In addition, HNBR is also widely used in industrial sealing for oil field exploration and processing, as well as rolls for steel and paper mills.

The Handbook of Homogeneous Hydrogenation; Wiley: Weinheim, Germany, 2006; pp 547-583 discloses **various catalysts** used to hydrogenate the double bonds without affecting the nitrile groups.
**Carbon-carbon double bonds** in polymers can be hydrogenated by treating the polymer in an organic solution **with hydrogen in the presence of a catalyst,** as disclosed in US6,881,797, US6,683,136, US6,410,657, US6,020,439, US5,705,571, US5,057,581 and US3,454,644. By using this process, selectivity can be achieved in the double bonds that are hydrogenated. For example, double bonds in aromatic or naphthenic groups can avoid hydrogenation, and double or triple bonds between carbon and other atoms can avoid being affected. There are many catalysts suitable for such hydrogenation reactions, including ones based on cobalt, nickel, rhodium, ruthenium, osmium, and palladium. Some factors such as the extent of hydrogenation required, the rate of the reaction, and the presence or lack of other groups such as carboxyl and nitrile groups all affect the suitability of the catalyst.

**Altering the nitrile content** in the polymer modifies the flexibility and resistivity of NBR and HNBR. An increased amount of nitrile provides greater oil and chemical resistance, but lower flexibility. As the nitrile content increases, so does the hardness of the rubber. **In order to reduce the nitrile content in the polymer, the nitrile groups are hydrogenated into primary amines.** This will increase the rubber's resilience towards many chemicals and increase its low temperature resistance, as well as aid in retaining the elasticity of the rubber.
**Nitrile hydrogenation** is a common practice in the production of amines, which have applications as solvents, intermediates for pharmaceuticals, raw materials for resins, textile additives, disinfectants, rubber stabilizers, corrosion inhibitors and in the manufacture of detergents and plastics.
Catalytic hydrogenation of nitriles is most common method to produce these **amines. Hydrogenation of small-molecule nitriles** has been widely investigated, while that of macromolecules has run into challenges in gel formation. This is a severe form of cross-linking that makes it difficult to conduct further tests on the material.
There has been a **lack of** published reports describing **hydrogenation of nitriles in polymer applications;** however both homogeneous and heterogeneous catalytic hydrogenation of nitriles has been widely studied on small molecular scales. There have also been reports on hydrogenation with alternative hydrogen resources.
Unfortunately, there is a **lack of published reports** focusing on the hydrogenation of polymer-based nitriles, with a concentrated area of the information mostly regarding the hydrogenation of small molecular nitriles, such as benzonitrile.
In the hydrogenation of nitriles, there are other products beyond the formation of primary amines; imines, secondary amines, and sometimes tertiary amines can also be formed from reactions between imines and amines. Under the hydrogenation of nitriles, both homogeneous and heterogeneous catalysts have been investigated, as well as hydrogenation with alternative hydrogen resources.

Different **chemicals** can be **used to modify rubber compounds** to achieve different properties. However, this can become problematic if it leads to gelling of the polymer. Crosslinking might be caused by the hydrogenation of C≡N group, by the oxidation of C≡C double bonds or by radicals in the system.

Plast. Rubber Compos. Process. Appl. 1995, 23, 103-109 discloses the cross-linking in blends of PVC (Polyvinyl chloride) and HNBR. Evidence of N-H and C≡N bonds in the IR spectra found that the nitrile groups produced some cross-linking.

**Secondary and tertiary amines** are a form of cross-linking that can greatly increase gel formation. These are side products in the hydrogenation of nitriles. Conversion of the nitrile group to a primary amine takes place relatively easily, but the selectivity of the reaction can strongly decrease due to secondary or tertiary amines forming in side-reactions. Catalyst differences, temperature and pressure changes, and the addition of ammonia can all change the selectivity of the amine product. Due to the gelling of the rubber that occurs with excess secondary and tertiary amines, it is important to develop selectivity for the production of primary amines. The greater the metal's capability to form multiple bonds, the greater the selectivity for primary amines. Thus, the choice of metal catalyst is one of the most important factors when determining the type of amine that is to be favored.

**Rhodium catalysts** have been known to favor secondary amines, however both aliphatic and aromatic nitriles have been able to be hydrogenated by **RhH(P$i$Pr$_3$)** in THF at 101325 Pa and 20 °C, producing a 44-100 % yield for primary amines.

Catalysis of Organic Reactions; Marcel Dekker Inc.: New York, 1994; Vol. 53, pp 497-502 and Stud. Surf. Sci. Catal. 1992, 73, 143-146 disclose experiments done on the hydrogenation of nitriles with a homogeneous multi-center **ruthenium complex [Ru(H)Cl(dppb)]$_3$.** They have reached a maximum selectivity of 95.5 % for the primary anime in the hydrogenation of benzonitrile in a dimethylacetamide (DMA) solution.

US 3,454,644 discloses the hydrogenation of benzonitrile in ethanol using the complex **RuCl$_2$(PPh$_3$)$_3$.** This yielded in 29 % of benzylamine after consuming a theoretical 85 % of hydrogen, implying a selectivity lower than 40 %. ChemSusChem 2008, 1, 801-804 discloses that this complex has **increased selectivity** to greater than 99 % with the addition of **t-BuOK.**

Chem. Eur. J. 2008, 14, 9491-9494 disclose an in situ catalytic system composed of **Ru(COD)(methylallyl$_2$)** with **1,1'-bis(diphenylphosphino)ferrocene(dppf) ligand** for the hydrogenation of nitriles, which has a **selectivity** greater than 99 % with the addition of **t-BuOK.**

C. R. Chim. 2004, 7, 769-778 discloses the hydrogenation of nitriles catalyzed by **RuH$_2$(CO)$_2$(P$n$Bu$_3$)$_2$, RuH$_2$(CO)$_2$(PPh$_3$)$_2$** and **RuH$_2$(PPh$_3$)$_4$** without any additives. Both conversion and selectivity were quite low, at < 80 % and < 50 % respectively under the range of the reaction conditions.

J. Am. Chem. Soc. 1981, 103, 7528-7535 and J. Am. Chem. Soc. 1981, 103, 7536-7542 disclose ionic ruthenium hydride catalysts **K$^+$[(Ph$_3$P)$_2$Ph$_2$PC$_6$H$_4$RuH$_2$]$^-$·C$_{10}$H$_8$(C$_2$H$_5$)$_2$O** and **K$^{+2}$[(Ph$_3$P)$_3$(Ph$_2$P)Ru$_2$H$_4$]$_2$$^{-2}$C$_6$H$_{14}$O$_3$** for the hydrogenation of nitriles. A highest selectivity of 65 % was obtained for the hydrogenation of acetonitrile.

Organometallics 2009, 28, 561-566 disclose **ruthenium nanoparticles** in nitrile-functionalized ionic liquids for the hydrogenation of benzonitrile. However, the main product was a secondary imine.

To sum up, the research in hydrogenation of nitriles **of small-molecule compounds** has been successful with both heterogeneous and homogeneous catalyst, with limited research focused on the hydrogenation of polymers. The **objective of the current invention** was to **provide an improved process** that would allow for a **high degree of hydrogenation** in order for the **selective hydrogenation of nitriles** in diene-based polymer in solution form and to **avoid gel formation** within an **acceptable duration of time** for the reaction and preferably at reasonable **mild temperatures.**

The **object** of the present invention was solved by a process of hydrogenating carbon-nitrogen triple bonds in hydrogenated nitrile rubber and of simultaneously hydrogenating carbon-nitrogen triple bonds and carbon-carbon double bonds in nitrile rubber, that being a copolymer of an α,β-unsaturated nitrile and a conjugated diene and optionally at least one further copolymerizable monomer, comprising subjecting the nitrile rubber which is present in solution form to a hydrogenation and in the presence of an unsupported ruthenium or rhodium catalyst and a basic reagent, wherein the catalyst is Ru(DPPF)methylallyl$_2$, {(p-cymene)RuCl}$_2$(μ-dppb) or RhH(P$i$Pr$_3$)$_3$, wherein DPPF is diphenylphosphino)ferrocene, dppb is 1,4-Bis(diphenylphosphino)butane and P$i$Pr$_3$ is tri-isopropylphosphine.

DETAILED DESCRIPTION OF THE INVENTION

**Nitrile rubbers** having carbon-nitrogen triple bonds which may be subjected to the inventive process comprise repeating units based on at least one α,β-ethylenically unsaturated nitrile-group containing monomer unit and one conjugated diene. In an alternative embodiment, the nitrile rubbers comprise at least one additional copolymerizable monomer.

As α,β-**ethylenically unsaturated nitrile-group containing monomer unit,** it is possible to use any known α,β-ethylenically unsaturated nitrile-group containing monomer, preferably a (C$_3$-C$_5$) α,β-ethylenically unsaturated nitrile-group containing monomer such as acrylonitrile, methacrylonitrile, ethacrylonitrile or mixtures thereof. Particular preference is given to **acrylonitrile** and **methacrylonitrile.**

The proportion of or of the sum of the $\alpha,\beta$-ethylenically unsaturated nitrile-group containing monomer units is usually from 10 to 60 % by weight, preferably from 15 to 50 % by weight, based on the total polymer. The proportions of the monomers in each case add up to 100% by weight.

The **conjugated diene** can be of any nature. Preference is given to using $(C_4-C_6)$ conjugated dienes. Particular preference is given to 1,3-butadiene, isoprene, 2,3-dimethylbutadiene, piperylene or mixtures thereof. Very particular preference is given to 1,3-butadiene and isoprene or mixtures thereof. Special preference is given to 1,3-butadiene.

The proportions of conjugated diene and $\alpha,\beta$-ethylenically unsaturated nitrile-group containing monomer units in the diene-based nitrile rubber to be used can vary within wide ranges. The proportion of or of the sum of the conjugated dienes is usually in the range from 40 to 90 % by weight, preferably in the range from 50 to 85 % by weight, based on the total polymer.

A particularly preferred nitrile rubber is thus a copolymer of **acrylonitrile** and **1,3-butadiene.**

Apart from the conjugated diene and the $\alpha,\beta$-ethylenically unsaturated nitrile-group containing monomer, it is possible to use one or more further **copolymerizable monomers** known to those skilled in the art, e.g. acrylonitrile, styrene, alpha-methyl styrene, a,$\beta$-unsaturated monocarboxylic or dicarboxylic acids, their esters or amides. As a,$\beta$-unsaturated monocarboxylic or dicarboxylic acids, preference is given to fumaric acid, maleic acid, acrylic acid and methacrylic acid. As esters of a,$\beta$-unsaturated carboxylic acids, preference is given to using their alkyl esters and alkoxyalkyl esters. Particularly preferred alkyl esters of a,$\beta$-unsaturated carboxylic acids are methyl acrylate, ethyl acrylate, propyl acrylate, propyl methacrylate, butyl acrylate, butyl methacrylate, 2-ethylhexyl acrylate, 2-ethylhexyl methacrylate and octyl acrylate. Particularly preferred alkoxyalkyl esters of a,$\beta$-unsaturated carboxylic acids are methoxyethyl (meth)acrylate, ethoxyethyl (meth)acrylate and methoxyethyl (meth)acrylate. It is also possible to use mixtures of alkyl esters, e.g. those mentioned above, with alkoxyalkyl esters, e.g. in the form of those mentioned above.

The optionally additional monomers can be present in amounts of from 0 % to 40 % by weight, preferably from 0.1 % to 40 % by weight, particularly preferably from 1 % to 30 % by weight, based on the total polymer. In this case, corresponding proportions of the conjugated diene or dienes and/or of the $\alpha,\beta$-ethylenically unsaturated nitrile-group containing monomer unit or units are replaced by the proportions of the additional monomers, with the proportions of all monomers in each case adding up to 100 % by weight.

**Preferred nitrile rubbers** include butadiene-acrylonitrile polymers (NBR) and butadiene-acrylonitrile-methacrylic acid polymers (XNBR). Preferred butadiene-acrylonitrile polymers have a acrylonitrile content of from 15 % to 50 % by weight based on 100 % polymer.

The **preparation of nitrile rubbers** by polymerization of the abovementioned monomers is adequately known to those skilled in the art and is comprehensively described in the polymer literature (e.g. Houben-Weyl, Methoden der Organischen Chemie Bd.14/1, 30 Georg Thieme Verlag Stuttgart 1961). Nitrile rubbers which can be used for the purpose of the invention are also commercially available, e.g. as products from the product range of the trade names Perbunan®, Krynac ® or Therban® from Lanxess Inc.

Polymers useful in the process of the present invention are high molecular weight materials and have Mooney viscosities (ML1+4@ 100 °C) of from 20 to 100. This corresponds to a weight average molecular weight $M_W$ in the range of 50,000 to 600,000, preferably in the range of 150,000 to 450,000. The diene-based nitrile rubbers used also have a polydispersity PDI = $M_w/M_n$, where $M_w$ is the weight average molecular weight and $M_n$ is the number average molecular weight, in the range of 2.0 to 6.0 and preferably in the range of 2.0 to 4.0.

In an alternative embodiment, the conjugated diene units are **partially** or **fully hydrogenated.**

**Hydrogenated nitrile rubber** is produced by hydrogenation of nitrile rubber. Accordingly, the C=C double bonds of the copolymerized diene units have been completely or partly hydrogenated in HNBR. The degree of hydrogenation of the copolymerized diene units is usually in the range from 50 % to 100 %. Hydrogenated nitrile rubber is a specialty rubber which has very good heat resistance, excellent resistance to ozone and chemicals and also excellent oil resistance. The above mentioned physical and chemical properties of HNBR are associated with very good mechanical properties, in particular, a high abrasion resistance. For this reason, HNBR has found wide use in a variety of applications. HNBR is used, for example, for seals, hoses, belts and clamping elements in the automobile sector, and also for stators, oil well seals and valve seals in the field of oil extraction and also for numerous parts in the aircraft industry, the electronics industry, mechanical engineering and shipbuilding.

Commercially available HNBR grades usually have a Mooney viscosity (ML1+4@100 °C) in the range from 35 to 150, which corresponds to a weight average molecular weight $M_w$ (method of determination: gel permeation chromatography (GPC) against polystyrene equivalents) in the range from 100,000 to 600,000. The polydispersity index PDI (PDI = $M_w/M_n$, where $M_w$ is the weight average molecular weight and $M_n$ is the number average molecular weight), which gives information about the width of the molecular weight distribution, measured here is in the range of 2.0 to 6,.0. The residual double bond content is usually in the range from 0.1 % to 25 %.

**Preferred hydrogenated nitrile rubbers** include hydrogenated butadiene-acrylonitrile polymers (HNBR) and hydrogenated butadiene-acrylonitrile-methacrylic acid polymers (HXNBR).

The hydrogenation process of the present invention is performed in the presence of an unsupported ruthenium or rhodium catalyst and a basic reagent, wherein the catalyst is Ru(DPPF)methylallyl$_2$, {(p-cymene)RuCl}$_2$($\mu$-dppb) or RhH(P$i$Pr$_3$)$_3$, wherein DPPF is diphenylphosphino)ferrocene, dppb is 1,4-Bis(diphenylphosphino)butane and P$i$Pr$_3$ is tri-isopropylphosphine.

The ruthenium or rhodium hydrogenation catalyst is not supported on an inert carrier, i.e. catalyst support material like carbon, Al$_2$O$_3$, TiO$_2$ or SiO$_2$.

The hydrogenation process of the present invention is preferably carried out with a **concentration of ruthenium or rhodium catalyst** in the range of from 10 mg/1 g polymer to 100 mg/1 g polymer.

The hydrogenation process of the present invention is preferably conducted with **potassium butoxide** as the basic reagent.

The hydrogenation process of the present invention is preferably carried out with a **concentration of basic compound** in the range of 10 mg/1 g polymer to 100 mg/1 g polymer.

The hydrogenation process of the present invention can be undertaken in a suitable reactor equipped with temperature regulating and agitating means. According to the present invention polymer solution can be fed into the reactor and degassed as required, the catalyst can then be added as a pure material or in some cases as a solution with a small amount of organic solvent and the reactor can then be pressurized with hydrogen.

The hydrogenation process of the present invention is preferably carried out with hydrogen gas at a **pressure** of from 0.1 MPa to 12 MPa, preferably at a pressure of from 1 MPa to 10 MPa.

The process of the present invention is preferably carried out at a temperature in the range of from 0 °C to 200 °C, preferably in the range of from 20 °C to 180 °C, more preferably in the range of from 600 °C to 160 °C and even more preferably in the range of 80 °C to 150 °C.

The hydrogenation process of the present invention may be carried out in an alternative embodiment at **mild conditions.** Mild conditions, according to the invention means, that the process is carried out at temperatures of 70 °C.

During the course of the hydrogenation reaction of the present invention, the hydrogen is added to the reactor. The **reaction time** is from 15 minutes to 100 hours, preferably from 1 hour to 10 hours.

When the hydrogenation reaction is complete to the extent desired, the reaction vessel can be **cooled** and vented.

The hydrogenation process of the present invention is preferably conducted in a **batch mode.**

The process of the present invention allows a hydrogenation of the carbon-nitrogen triple bonds (nitrile groups) which are present in hydrogenated acrylonitrile butadiene rubber (HNBR) and a tandem hydrogenation of carbon-nitrogen triple bonds (nitrile groups) and carbon-carbon double bonds (olefinic groups) in acrylonitrile butadiene rubber (NBR).

The feature of using an **unsupported ruthenium or rhodium catalyst** to hydrogenate the carbon-nitrogen triple bonds and carbon-carbon double bonds in an ethylenically unsaturated or saturated polymer which is present in solution form is **important for the successful performance of the process** pursuant to the present invention.

The feature of using a **basic reagent** is important to prevent **visible gel formation** during the hydrogenation process.

Using the process of the present invention a high degree of hydrogenation is achieved for nitrile hydrogenation and for tandem hydrogenation of nitrile groups and olefinic groups.

The invention is further illustrated but is not intended to be limited by the following examples.

## EXAMPLES

The materials used in the hydrogenation reaction are listed in Table 1.

**Table 1 Specification of the Materials**

| Materials | Supplier |
|---|---|
| Butadiene-acrylonitrile polymer (Perbunan®), containing 34 % acrylonitrile | Lanxess Inc. |
| Hydrogenated butadiene-acrylonitrile polymer (Therban®), containing 34 % acrylonitrile | Lanxess Inc. |
| Ru(DPPF)methylallyl$_2$ | Synthesized according to literature procedures (Enthaler, S.; Addis, D.; Junge, K.; Erre, G., etc. Chem. Eur. J. 2008, 14, 9491-9494) |

(continued)

| Materials | Supplier |
|---|---|
| {(p-cymene)RuCl)$_2$($\mu$-dppb) | Synthesized according to literature procedures (S. Werkmeister, C. Bornschein, K.. Junge, M. Beller, Chem. Eur. J. 2013, 19, 4437-4440.) |
| RhH(P$i$Pr$_3$)$_3$ | Synthesized according to literature procedures (Yoshida T., Okano T., Thorn D. L., etc. J. Organomet. Chem. 1979, 181, 183-201) |
| Potassium butoxide (KOtBu) | Sigma Aldrich |
| Hydrogen (H$_2$) (99.99 %) | Praxair |
| Tetrahydrofuran (THF) (99.9 %) | Fisher Scientific |

**Measurement methods:**

**CC-conversion**

The degree of hydrogenation was calculated based on the peak strength from the IR spectra according to American Standard Test Method (ASTM) D5670-95. For FT-IR analysis, the samples were coagulated with ethanol to yield dry solid rubber which were then dissolved in MEK. Afterwards, the MEK solution was spread on NaCl disk and dried to form a rubber film for measurement. Each sample was tested twice and the average value was taken. Without undergoing any hydrogenation of carbon-carbon double bonds, the content of C≡3N in both HNBR and NBR is 34 % which remains unchanged during the olefinic hydrogenation experiments. The calculation for C=C hydrogenation can be found below:

$$A(723) = \frac{A723}{A2236} \text{ and } A(970) = \frac{A970}{A2236}$$

A723 = absorbance at 723 cm$^{-1}$; A970 = absorbance at 970 cm$^{-1}$; A2236 = absorbance at 2236 cm$^{-1}$

$$F = 1 + \frac{A(970)}{K(970)} + \frac{A(723)}{K(723)}$$

K(723) = 0.255, a constant specific to this peak; K(970) = 2.3, a constant specific to this peak

$$C(BR) = \frac{A(970)}{[K(970) \times F]} = carbon-carbon\ double\ bonds\ remaining\ in\ HNBR$$

$$C(HBR) = \frac{A(723)}{[K(723) \times F]}$$

$$= methylene\ groups\ formed\ from\ hydrogenation\ of\ NBR$$

$$\boldsymbol{Degree\ of\ Hydrogenation\ (mol\ \%)} = 100 - \frac{C(BR)}{C(BR) + C(HBR)} \times 100$$

**CN-content**

The conversion of nitrile groups was calculated based on the peak strength from the IR spectra. HNBR was used in the experiments as little (< 5%) carbon-carbon double bonds exist in it; in other words, the peak at 723 cm$^{-1}$

(-(CH$_2$)$_X$-) in the IR spectra remains unchanged. So the peak at 723 cm$^{-1}$ is used as an internal standard, and the ratio of the peak value (peak height) of the nitrile group (at wavenumber 2236 cm$^{-1}$) and peak height at 723 cm$^{-1}$ is calculated for each sample which is taken during the reaction. In the end, a series of values of the ratio is listed. It was found that the ratio decreases as the reaction proceeds, which means that the nitrile content is being reduced.

**Gel formation**

Gel formation (gelling or gelation) was determined by checking if the resultant HNBR was totally soluble in MCB, MEK or THF at room temperature by the naked eye.

**Hydrogenation of carbon-nitrogen triple bonds in hydrogenated nitrile rubber (HNBR) with Ru(DPPF)methylallyl$_2$**

A 300 ml glass-lined stainless steel autoclave, equipped with temperature control means, an agitator, a pressure gauge and a H$_2$ gas addition port, was used as a reactor. 100 ml **hydrogenated nitrile butadiene rubber** (HNBR) solution (2.5 % w/w in THF) and 77 mg **Ru(DPPF)methylallyl$_2$** (which is 34.68 mg/1 g polymer) and 168 mg KOtBu (which is 75.68 mg/1 g polymer) was added into the reactor and the reactor was degassed with H$_2$ gas. The temperature and the hydrogen pressure was applied for a certain reaction time according to Table 2 (e.g. Example #1.1: 120 °C, 3.45 MPa; 4 hours).
Example #1.9 is a comparative example without a basic reagent.
An overview of the results of the examples 1.1-1.9 is given in the following Table 2.

**Table 2: Results of the hydrogenation reaction of HNBR with Ru(DPPF)methylallyl$_2$**

| Ex.# | Base [mg/1 g polymer] | T [°C] | P$_{H2}$ [MPa] | Reaction time [h] | C≡N content [%] | Visible gel |
|------|------------------------|--------|----------------|-------------------|-----------------|-------------|
| 1.1  | 75.68                  | 120    | 3,45           | 4                 | 33.20           | No          |
| 1.2  | 75.68                  | 150    | 3,45           | 4                 | 19.28           | No          |
| 1.3  | 75.68                  | 150    | 3,45           | 5                 | 16.44           | No          |
| 1.4  | 75.68                  | 150    | 3,45           | 10                | 10.32           | No          |
| 1.5  | 75.68                  | 150    | 3,45           | 21                | 6.12            | No          |
| 1.6  | 75.68                  | 150    | 5,52           | 4                 | 14.48           | No          |
| 1.7  | 75.68                  | 150    | 6,90           | 4                 | 12.14           | No          |
| 1.8  | 75.68                  | 150    | 8,27           | 4                 | 11.18           | No          |
| 1.9  | 0                      | 150    | 3,45           | 4                 | N/A             | Yes         |

In Example number 1.9, the C≡N content was not measurable due to severe gel formation.
The C≡N-content decreases with increasing temperature (1.1-1.2). The C≡N-content decreases with increased reaction time (1.2-1.5). The C≡N-content decreases with increasing H$_2$ pressure (1.2; 1.6-1.8). A low C≡N-content is equivalent to a high hydrogenation rate.

**Tandem hydrogenation of carbon-carbon double bonds (olefinic groups) and carbon-nitrogen triple bonds in nitrile butadiene rubber (NBR) with Ru(DPPF)methylallyl$_2$**

A 300 ml glass-lined stainless steel autoclave, equipped with temperature control means, an agitator, a pressure gauge and a H$_2$ gas addition port, was used as a reactor. 100 ml **nitrile butadiene rubber** (NBR) solution (2.5 % w/w in THF) and 77 mg **Ru(DPPF)methylallyl$_2$** (which is 34.68 mg/1 g polymer) and 168 mg KOtBu (which is 75.68 mg/1 g polymer) was added into the reactor and the reactor was degassed with H$_2$ gas. The temperature and the hydrogen pressure was applied for a certain reaction time according to Table 3 (e.g. Example #1.10: 100 °C, 5.52 MPa; 5 hours).
Example #1.18 is a comparative example without a basic reagent.
An overview of the results of the examples 1.10-1.17 is given in the following Table 3.

**Table 3: Results of the hydrogenation reactions of NBR with Ru(DPPF)methylallyl$_2$**

| Ex.# | Base [mg/1 g polymer] | Temp. [°C] | P$_{H2}$ [MPa] | Reaction time [h] | C≡N content [%] | C≡C conversion [%] | Visible gel |
|---|---|---|---|---|---|---|---|
| 1.10 | 75.68 | 120 | 5,52 | 5 | 34.51 | 68.81 | No |
| 1.11 | 75.68 | 150 | 5,52 | 5 | 26.2 | 78.67 | No |
| 1.12 | 75.68 | 150 | 5,52 | 31.5 | 14.7 | 93.11 | No |
| 1.13 | 75.68 | 150 | 5,52 | 47 | 10.2 | 96.27 | No |
| 1.14 | 75.68 | 150 | 6,90 | 5 | 22.23 | 84.60 | No |
| 1.15 | 75.68 | 150 | 8,27 | 5 | 18.56 | 89.54 | No |
| 1.16 | 75.68 | 150 | 10,3 | 5 | 16.35 | 91.36 | No |
| 1.17 | 0 | 150 | 5.52 | 5 | N/A | N/A | Yes |

In Example number 1.17, the C≡N content and the C=C conversion were not measurable due to severe gel formation.

The C=C conversion (and thus the hydrogenation) of the NBR increases with increasing reaction time (1.11-1.13). The C=C conversion of the NBR increases with increasing H$_2$ pressure (1.11, 1.14-1.16). The C=C conversion of the NBR increases with increasing temperature (1.10-1.11). A high C=C conversion is equivalent to a high hydrogenation rate.

**Hydrogenation of carbon-nitrogen triple bonds in hydrogenated nitrile rubber (HNBR) with {(p-cymene)RuCl}$_2$($\mu$-dppb)**

A 300 ml glass-lined stainless steel autoclave, equipped with temperature control means, an agitator, a pressure gauge and a hydrogen gas addition port, was used as a reactor. 100 ml **hydrogenated nitrile butadiene rubber** (HNBR) solution (2.5 % w/w in THF) and 52 mg **{(p-cymene)RuCl}$_2$($\mu$-dppb)** (which is 23.42 mg/1 g polymer) and 112 mg KOtBu (which is 49.55 mg/1 g polymer) were added into the reactor and the reactor was degassed with H$_2$ gas. The temperature and the hydrogen pressure was applied for a certain reaction time according to Table 4 (e.g. Example #2.1: 120 °C, 2.06 MPa; 45.5 hours).

Example #2.8 is a comparative example without a basic reagent.

A summary of all the examples 2.1-2.8 is given in the following Table 4.

**Table 4: Results of the hydrogenation reaction with {(p-cymene)RuCl}$_2$($\mu$-dppb)**

| Ex.# | Base [mg/1 g polymer] | Temp. [°C] | p$_{H2}$ [MPa] | Reaction time [h] | C≡N content [%] | Visible gel |
|---|---|---|---|---|---|---|
| 2.1 | 49.55 | 120 | 2,07 | 45.5 | 31.5 | No |
| 2.2 | 49.55 | 120 | 3,45 | 24 | 31.9 | No |
| 2.3 | 49.55 | 120 | 4,83 | 22 | 26.9 | No |
| 2.4 | 49.55 | 120 | 6,21 | 22 | 25.6 | No |
| 2.5 | 49.55 | 120 | 6,90 | 22 | 18.7 | No |
| 2.6 | 49.55 | 120 | 8,27 | 24 | 15.2 | No |
| 2.7 | 49.55 | 120 | 10,3 | 22 | 15.3 | No |
| 2.8 | 0 | 120 | 3,45 | 24 | N/A | Yes |

In Example number 2.8, the C≡N content was not measurable due to severe gel formation. The C≡N-content is decreased with an increase of the H$_2$ pressure (2.3-2.5; 2.7).

**Hydrogenation of carbon-nitrogen triple bonds in hydrogenated nitrile rubber (HNBR) with RhH(P/Pr$_3$)$_3$**

A 300 ml glass-lined stainless steel autoclave, equipped with temperature control means, an agitator, a pressure

gauge and a $H_2$ gas addition port, was used as a reactor. 100 ml **hydrogenated acrylonitrile butadiene rubber** (HNBR) solution (2.5 % w/w in THF), a certain amount of KOtBu according to table 5 and 0.038 g **RhH(P$i$Pr$_3$)$_3$** (which is 17 mg/1 g polymer) was added into the reactor and the reactor was degassed with $H_2$ gas. The temperature and the hydrogen pressure was applied for a certain reaction time according to Table 5 (e.g. Example #3.1: 60 °C, 3.45 MPa; 5 hours).

Example #3.7 is a comparative example without basic reagent.

A summary of all the examples 3.1-3.7 is given in the following Table 5.

**Table 5: Results of the hydrogenation reaction of HNBR with RhH(P$i$Pr$_3$)$_3$**

| Ex.# | Base [mg/1 g polymer] | Temp. [°C] | $p_{H2}$ [MPa] | Reaction time [h] | C≡N content [%] | Visible gel |
|------|----------------------|------------|----------------|-------------------|-----------------|-------------|
| 3.1 | 45.79 | 60 | 3.45 | 5 | 1.33 | No |
| 3.2 | 31.67 | 60 | 3.45 | 5 | 0.50 | No |
| 3.3 | 21.86 | 60 | 3.45 | 5 | 1.25 | No |
| 3.4 | 10.27 | 60 | 3.45 | 5 | 1.15 | No |
| 3.5 | 45.79 | 80 | 3.45 | 5 | 1.35 | No |
| 3.6 | 45.79 | 100 | 3.45 | 5 | 1.78 | No |
| 3.7 | 0 | 60 | 3.45 | 5 | 14 | Yes |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

**Claims**

1.    A process of hydrogenating carbon-nitrogen triple bonds in hydrogenated nitrile rubber and of simultaneously hydrogenating carbon-nitrogen triple bonds and carbon-carbon double bonds in nitrile rubber, that being a copolymer of an a,β-unsaturated nitrile and a conjugated diene and optionally at least one further copolymerizable monomer, comprising subjecting the nitrile rubber which is present in solution form to a hydrogenation and in the presence of an unsupported ruthenium or rhodium catalyst and a basic reagent, wherein the catalyst is Ru(DPPF)methylallyl$_2$, {(p-cymene)RuCl}$_2$(μ-dppb) or RhH(P$i$Pr$_3$)$_3$, wherein DPPF is 1,1'-bis(diphenylphosphino)ferrocene, dppb is 1,4-bis(diphenylphosphino)butane and P$i$Pr$_3$ is tri-isopropylphosphine.

2.    The process according to claim 1, wherein the nitrile group is selected from acrylonitrile and methacrylonitrile.

3.    The process according to claim 1 or 2, wherein the unsaturated polymer is an acrylonitrile butadiene copolymer.

4.    The process according to any of the claims 1 to 3, wherein the ruthenium or rhodium catalyst is used in a concentration in the range of from 10 mg/1 g polymer to 100 mg/1 g polymer.

5.    The process according to any of the claims 1 to 4, wherein the hydrogenation is carried out at a hydrogen pressure of from 0.1 MPa to 12 MPa, preferably at a pressure of from 1 MPa to 10 MPa.

6.    The process according to any of the claims 1 to 5, wherein the hydrogenation is carried out at a temperature in the range of from 0 °C to 200 °C, preferably in the range of from 20 °C to 180 °C, more preferably in the range of from 600 °C to 160 °C and even more preferably in the range of 80 °C to 150 °C.

7.    The process according to any of the claims 1 to 6, wherein the basic reagent is potassium butoxide.

8.    The process according to any of the claims 1 to 7, wherein the basic reagent is used in a concentration of in the range of from 10 mg/1 g polymer to 100 mg/1 g polymer.

9.    The process according to any of the claims 1 to 8, wherein the hydrogenation is conducted in a batch mode.

**Patentansprüche**

1. Verfahren zur Hydrierung von Kohlenstoff-Stickstoff-Dreifachbindungen in hydriertem Nitrilkautschuk und zur gleichzeitigen Hydrierung von Kohlenstoff-Stickstoff-Dreifachbindungen und Kohlenstoff-Kohlenstoff-Doppelbindungen in Nitrilkautschuk, bei dem es sich um ein Copolymer eines $\alpha,\beta$-ungesättigten Nitrils und eines konjugierten Diens und gegebenenfalls mindestens eines weiteren copolymerisierbaren Monomers handelt, bei dem man den in gelöster Form vorliegenden Nitrilkautschuk einer Hydrierung in Gegenwart eines ungeträgerten Ruthenium- oder Rhodiumkatalysators und eines basischen Reagenz unterwirft, wobei es sich bei dem Katalysator um Ru(DPPF)Methylallyl$_2$, {(p-Cymol)RuCl}$_2$($\mu$-dppb) oder RhH(P$i$Pr$_3$)$_3$ handelt, wobei DPPF für 1,1'-Bis(diphenylphosphino)ferrocen steht, dppb für 1,4-Bis(diphenylphosphino)butan steht und P$i$Pr$_3$ für Triisopropylphosphin steht.

2. Verfahren nach Anspruch 1, wobei die Nitrilgruppe aus Acrylnitril und Methacrylnitril ausgewählt wird.

3. Verfahren nach Anspruch 1 oder 2, wobei es sich bei dem ungesättigten Polymer um ein AcrylnitrilButadien-Copolymer handelt.

4. Verfahren nach einem der Ansprüche 1 bis 3, wobei der Ruthenium- oder Rhodiumkatalysator in einer Konzentration im Bereich von 10 mg/1 g Polymer bis 100 mg/1 g Polymer verwendet wird.

5. Verfahren nach einem der Ansprüche 1 bis 4, wobei die Hydrierung bei einem Wasserstoffdruck von 0,1 MPa bis 12 MPa, vorzugsweise bei einem Druck von 1 MPa bis 10 MPa, durchgeführt wird.

6. Verfahren nach einem der Ansprüche 1 bis 5, wobei die Hydrierung bei einer Temperatur im Bereich von 0 °C bis 200 °C, vorzugsweise im Bereich von 20 °C bis 180 °C, weiter bevorzugt im Bereich von 600 °C bis 160 °C und noch weiter bevorzugt im Bereich von 80 °C bis 150 °C, durchgeführt wird.

7. Verfahren nach einem der Ansprüche 1 bis 6, wobei es sich bei dem basischen Reagenz um Kalium-t-butoxid handelt.

8. Verfahren nach einem der Ansprüche 1 bis 7, wobei das basische Reagenz in einer Konzentration im Bereich von 10 mg/1 g Polymer bis 100 mg/1 g Polymer verwendet wird.

9. Verfahren nach einem der Ansprüche 1 bis 8, wobei die Hydrierung diskontinuierlich durchgeführt wird.

**Revendications**

1. Procédé d'hydrogénation de triples liaisons carbone-azote dans un caoutchouc hydrogéné de nitrile et d'hydrogénation simultanée de triples liaisons carbone-azote et de doubles liaisons carbone-carbone dans un caoutchouc de nitrile, qui est un copolymère d'un nitrile $\alpha,\beta$-insaturé et d'un diène conjugué et éventuellement d'au moins un monomère copolymérisable supplémentaire, comprenant la soumission du caoutchouc de nitrile qui est présent sous forme de solution à une hydrogénation et en présence d'un catalyseur non supporté de ruthénium ou de rhodium et d'un réactif alcalin, le catalyseur étant Ru(DPPF)méthylallyl$_2$, {(p-cymène)RuCl}$_2$($\mu$-dppb) ou RhH(P$i$Pr$_3$)$_3$, DPPF étant le 1,1'-bis(diphénylphosphino)ferrocène, dppb étant le 1,4-bis(diphénylphosphino) butane et P$i$Pr$_3$ étant la tri-isopropylphosphine.

2. Procédé selon la revendication 1, le groupe nitrile étant choisi parmi l'acrylonitrile et le méthacrylonitrile.

3. Procédé selon la revendication 1 ou 2, le polymère insaturé étant un copolymère d'acrylonitrile-butadiène.

4. Procédé selon l'une quelconque des revendications 1 à 3, le catalyseur de ruthénium ou de rhodium étant utilisé en une concentration dans la plage allant de 10 mg/1 g de polymère à 100 mg/1 g de polymère.

5. Procédé selon l'une quelconque des revendications 1 à 4, l'hydrogénation étant mise en œuvre à une pression d'hydrogène allant de 0,1 MPa à 12 MPa, préférablement à une pression allant de 1 MPa à 10 MPa.

6. Procédé selon l'une quelconque des revendications 1 à 5, l'hydrogénation étant mise en œuvre à une température dans la plage allant de 0 °C à 200 °C, préférablement dans la plage allant de 20 °C à 180 °C, plus préférablement dans la plage allant de 600 °C à 160 °C et encore plus préférablement dans la plage de 80 °C à 150 °C.

**7.** Procédé selon l'une quelconque des revendications 1 à 6, le réactif alcalin étant le butoxyde de potassium.

**8.** Procédé selon l'une quelconque des revendications 1 à 7, le réactif alcalin étant utilisé en une concentration dans la plage allant de 10 mg/1 g de polymère à 100 mg/1 g de polymère.

**9.** Procédé selon l'une quelconque des revendications 1 à 8, l'hydrogénation étant conduite dans un mode par lot.

**EP 3 248 989 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6881797 B
- US 6683136 B
- US 6410657 B
- US 6020439 A
- US 5705571 A
- US 5057581 A
- US 3454644 A

### Non-patent literature cited in the description

- The Handbook of Homogeneous Hydrogenation. Wiley, 2006, 547-583
- *Plast. Rubber Compos. Process. Appl.,* 1995, vol. 23, 103-109
- Catalysis of Organic Reactions. Marcel Dekker Inc, 1994, vol. 53, 497-502
- *Stud. Surf. Sci. Catal.,* 1992, vol. 73, 143-146
- *ChemSusChem,* 2008, vol. 1, 801-804
- *Chem. Eur. J.,* 2008, vol. 14, 9491-9494
- *C. R. Chim.,* 2004, vol. 7, 769-778
- *J. Am. Chem. Soc.,* 1981, vol. 103, 7528-7535
- *J. Am. Chem. Soc.,* 1981, vol. 103, 7536-7542
- *Organometallics,* 2009, vol. 28, 561-566
- Houben-Weyl, Methoden der Organischen Chemie. Georg Thieme Verlag, 1961, vol. 14/1, 30
- **ENTHALER, S ; ADDIS, D. ; JUNGE, K. ; ERRE, G.** *Chem. Eur. J.,* 2008, vol. 14, 9491-9494
- **S. WERKMEISTER ; C. BORNSCHEIN ; K.. JUNGE ; M. BELLER.** *Chem. Eur. J.,* 2013, vol. 19, 4437-4440
- **YOSHIDA T. ; OKANO T. ; THORN D. L.** *J. Organomet. Chem.,* 1979, vol. 181, 183-201